# EUROPÄISCHE PATENTSCHRIFT

(11) **EP 1 722 998 B1**
(45) Veröffentlichungstag und Bekanntmachung des Hinweises auf die Patenterteilung: **13.12.2017**
(21) Anmeldenummer: 05714934.6
(22) Anmeldetag: 04.02.2005
(51) Int. Cl.: B60L 13/04, H01F 27/08

(54) **MAGNETPOL FÜR MAGNETSCHWEBEFAHRZEUGE**
MAGNETIC POLE FOR MAGNETIC LEVITATION VEHICLES
POLE MAGNETIQUE DE VEHICULES A SUSTENTATION MAGNETIQUE

(30) Priorität: 09.03.2004 DE 102004011940
(43) Veröffentlichungstag der Anmeldung: 22.11.2006
(73) Patentinhaber: ThyssenKrupp Transrapid GmbH, 34127 Kassel (DE)
(72) Erfinder: HAHN, Wolfgang, 34125 Kassel (DE); ZHENG, Qinghua, 80331 München (DE)
(74) Vertreter: Lorenz, Bernd Ingo Thaddeus
(86) Internationale Anmeldenummer: PCT/DE2005/000183
(87) Internationale Veröffentlichungsnummer: WO 2005/087532

(56) Entgegenhaltungen:
- EP-A- 0 472 197
- DE-A- 2 442 388
- JP-A- 06 290 933
- JP-A- 11 196 546

## Beschreibung

Die Erfindung betrifft einen Magnetpol für Magnetschwebefahrzeuge mit einem Kern und einer auf diesen aufgebrachten Wicklung.

Magnetpole dieser Art werden bei Magnetschwebefahrzeugen in vielfältiger Form eingesetzt, z. B. als Teile von Trag-, Führ- oder Bremsmagneten. Bisher werden diese Magnetpole aus einem Eisenkern und einer auf diesen aufgebrachten Wicklung hergestellt, die aus abwechselnd aufeinander folgenden Lagen eines Leiters und eines Isolators gebildet ist (PCT WO 97/30 504). Die Leiter und Isolatoren bestehen dabei aus bandförmigen Materialien, z. B. Aluminiumbändern und dünnen Isolierfolien.

Die bekannten Magnetpole bestehen üblicherweise aus je einer Scheibe, so daß die Lagenzahl gleich der Windungszahl ist. Dadurch ergibt sich bei hoher Windungszahl ein Kühlproblem. Wenn der Kern gleichzeitig als Kühlkörper wirken soll, muss die in den einzelnen Lagen erzeugte Wärme in radialer Richtung auch die elektrisch gewünschten, thermisch jedoch störenden Isolierfolien durchdringen, deren thermischer Gesamtwiderstand mit zunehmender Anzahl der Lagen stetig zunimmt.

Ein Magnetpol mit den Merkmalen des Oberbegriffes des Anspruches 1 ist aus der DE 24 42 388 A1 bekannt. Die Wicklung ist in zwei Scheiben aufgeteilt, um in dem dazwischen gebildeten Spalt die Kühlung mit einem Kühlmedium zu ermöglichen. Die Bereitstellung eines Kühlkreislaufes ist jedoch aufwendig.

Der Erfindung liegt daher das technische Problem zugrunde, den Magnetpol der eingangs bezeichneten Gattung so auszubilden, daß ohne wesentliche Beeinträchtigung
der elektromagnetischen Kenngrößen und des vom Magnetpol eingenommenen Raums die Wärmeabfuhr verbessert wird.

Zur Lösung dieses Problems dienen die kennzeichnenden Merkmale des Anspruchs 1.

Bei Anwendung eines erfindungsgemäßen Magnetpols mit zwei Scheiben braucht der Wärmestrom bei gleicher, jedoch auf beide Scheiben verteilter Windungszahl in radialer Richtung nur eine entsprechend geringere Anzahl von elektrischen Isolationsschichten durchdringen. Dadurch wird bei sonst gleichen Verhältnissen im Hinblick auf die Gesamtwindungszahl, die maximale Klemmenspannung und den vom Magnetpol eingenommenen Raum eine erheblich bessere Kühlleistung erzielt.

Weitere Vorteile der Erfindung ergeben sich aus den Unteransprüchen.

Die Erfindung wird nachfolgend in Verbindung mit den beiliegenden Zeichnungen an Ausführungsbeispielen näher erläutert. Es zeigen:
Fig. 1 in perspektischer Darstellung die Bewicklung eines üblichen, eine einscheibige Wicklung aufweisenden Magnetpols für Magnetschwebefahrzeuge;
Fig. 2 schematisch die Wärmeströme in einem Magnetpol nach Fig. 1 während seiner Benutzung; und
Fig. 3 schematisch einen Schnitt längs der Linie III - III der Fig. 1 durch eine Hälfte eines Magnetpols, jedoch bei erfindungsgemäßer Ausgestaltung.

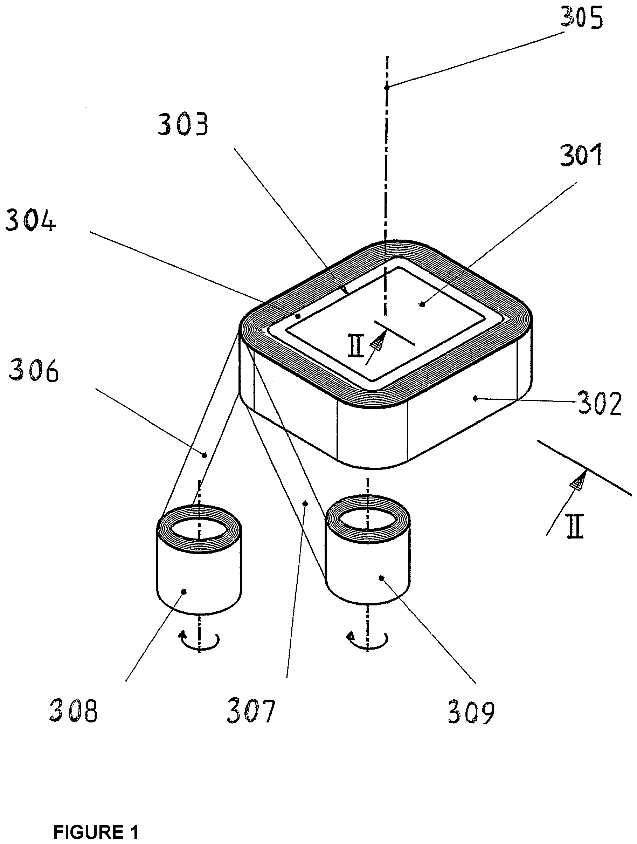

Ein Magnetpol der hier interessierenden Art enthält nach Fig. 1 einen aus einem Blechpaket bestehenden, vorzugsweise quaderförmigen Eisenkern 301 mit abgerundeten Ecken und eine auf diesen aufgebrachte Wicklung 302. Die Herstellung des Kerns 301 kann auf viele verschiedene Arten erfolgen und ist für die vorliegende Erfindung unbedeutend. Außerdem kann der Kern 301 mit einem umlaufenden, an seiner Mantelfläche anliegenden Wicklungsträger 303 versehen sein, der aus einem z. B. Kunststoff hergestellten Isoliermaterial besteht und Montageflansche 304 aufweist, zwischen denen die Wicklung 302 zu liegen kommt. Der Wicklungsträger 303 dient somit sowohl zur Montage der Wicklung 302 als auch zur elektrischen Isolierung der Wicklung 302 gegen den Kern 301 in radialer Richtung, bezogen auf eine Mittel- und Wickelachse 305 des Kerns 301.

Die Wicklung 302 wird z. B. durch abwechselnd aufeinander folgende Lagen aus einem Leiterband 306 (z. B. Aluminium) und zwischen diesen angeordneten, ersten Isolationsschichten 307 in Form einer Isolierfolie od. dgl. gebildet, die die Lagen in radialer Richtung elektrisch gegeneinander isolieren. Bei der Herstellung des Magnetpols 301 werden die Leitungsbänder 306 und die Isolationsschichten 307 in bekannter Weise von Vorratsspulen 308, 309 abgewickelt und koaxial um die Mittelachse 305 auf den Kern 301 gewickelt. Die dadurch erhaltene Wicklung 302 besteht daher aus einer zur Mittelachse 305 koaxialen Scheibe, die in radialer Richtung eine Vielzahl von Lagen aufweist.

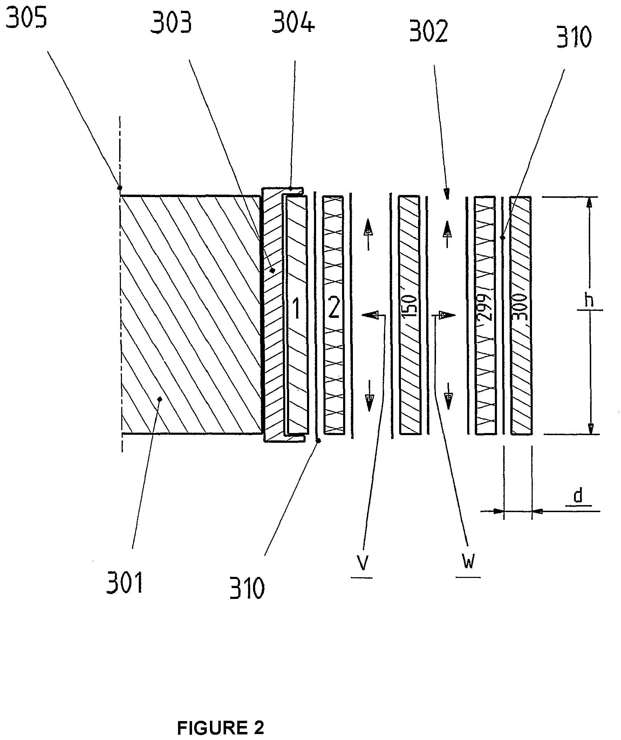

Magnetpole der beschriebenen Art für Magnetschwebefahrzeuge weisen z. B. bis zu 300 Lagen auf, die in Fig. 2 schematisch mit den Bezugszeichen 1 ... 300 bezeichnet sind. Daher muß die beim Betrieb erzeugte Wärme, sofern sie in einer mittleren, z. B. der Lage 150 der Wicklung 302 erzeugt wird, in radialer Richtung sowohl nach innen zum Kern 301 hin als auch radial nach außen in Richtung eingezeichneter Pfeile v bzw. w jeweils eine Vielzahl von z. B. 150, in Fig. 2 lediglich durch Linien angedeutete Isolationsschichten 310 durchdringen, die zur elektrischen Isolierung eine bestimmte Mindestdicke haben müssen. Die Wärmeabfuhr und damit die Kühlwirkung in radialer Richtung ist daher stark von der Zahl der vorhandenen Lagen 1 ... 300 abhängig.

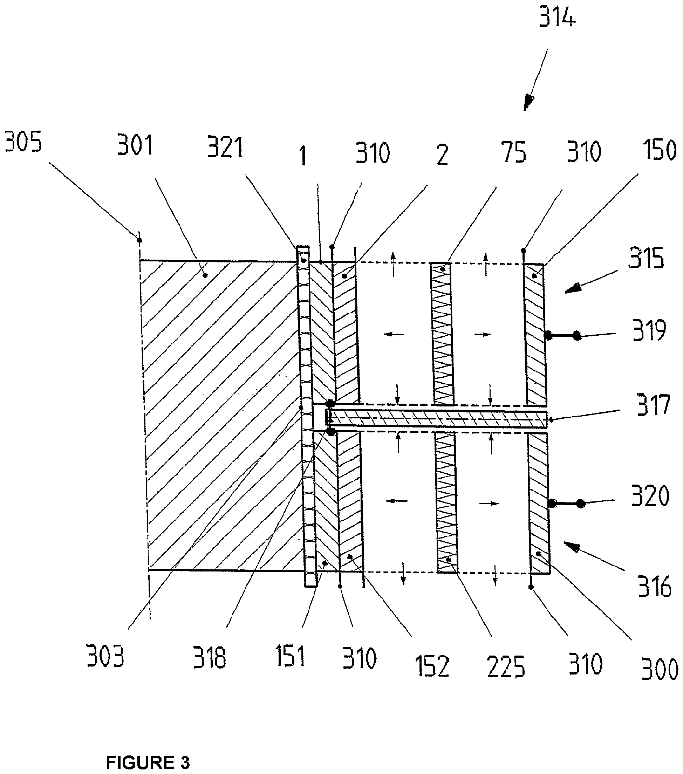

Erfindungsgemäß wird dagegen vorgeschlagen, die Lagen 1 ... 300 einer Wicklung 314 gemäß Fig. 3, in der im übrigen gleiche Teile mit denselben Bezugszeichen wie in Fig. 1 und 2 versehen sind, auf zwei oder mehr, in axialer Richtung übereinander liegende Scheiben 315 und 316 zu verteilen. Besonders vorteilhaft ist es, wenn beide (oder alle) Scheiben 315, 316 jeweils im wesentlichen dieselbe Anzahl von Lagen bzw. Windungen aufweisen. Dies ist in Fig. 3 dadurch realisiert, daß z. B. die Scheibe 315 die Lagen 1 bis 150 und die Scheibe 316 die Lagen 151 bis 300 aufweist. In magnetischer Hinsicht ergibt sich dadurch bei gleichem Strom dieselbe Durchflutung wie im Beispiel nach Fig. 2. Damit auch die für die Verlustleistung maßgeblichen Querschnittsflächen der einzelen Lagen dieselben wie in Fig. 2 sind, ohne daß die axialer Richtung gemessene Höhe des Magnetpols vergrößert werden muß, weisen die Lagen 1 ... 300 in Fig. 3 wenigstens die halbe Höhe h und die doppelte Dicke d im Vergleich zu Fig. 2 auf. Schließlich ist in Fig. 3 eine zweite Isolierschicht 317 vorgesehen, die zwischen den beiden Scheiben 315, 316 angeordnet ist und diese in axialer Richtung elektrisch gegeneinander isoliert. Die beiden Varianten nach Fig. 2 und 3 haben daher im wesentlichen denselben Platzbedarf. Die zusätzliche Isolationsschicht 317 vergrößert die Bauhöhe nur unwesentlich, da ihre Dicke allenfalls einige Millimeter betragen braucht. Das sog. Wickelfenster ist somit in beiden Fällen im wesentlichen identisch.

Die Lagen 1 bis 150 der ersten Scheibe 315 und 151 bis 300 der zweiten Scheibe 316 können mit gleichem oder mit entgegengesetztem Wicklungssinn um den Kern 301 gewickelt sein. Bei gleichem Wicklungssinn müßte ein elektrischer Anschluß für die Lagen unmittelbar am Kern 301 vorgesehen und zusätzlich eine Verbindung der 150. Lage mit der 151. Lage vorgesehen werden. Das ist einerseits konstruktiv aufwendig, andererseits aus elektrischen Gründen unerwünscht, weil innen liegende Anschlüsse meistens zu scharfen Kanten und Spitzen führen, die unerwünschte elektrische Durchbrüche und damit eine Beschädigung der innersten Isolationsschicht bzw. des Wicklungsträgers 303 zur Folge haben können, wenn nicht zusätzliche Isolierungsmaßnahmen getroffen werden.

Erfindungsgemäß ist daher weiter vorgesehen, für die Leitungsbänder 306 (Fig. 1) in den beiden Scheiben 315, 316 einen entgegengesetzten Wicklungssinn vorzusehen, d. h. die Lagen 1 ... 150 entgegengesetzt zu den Lagen 151 ... 300 um den Kern 301 zu wickeln, und außerdem die beiden innen am Kern 301 liegenden Lagen 1 und 151 durch eine Verbindungsleitung 318 elektrisch miteinander zu verbinden. In diesem Fall können die beiden radial äußeren Lagen 150 und 300 mit je einem elektrischen Anschluß 319, 320 versehen werden, von denen der eine als Zuleitung und der andere als Ableitung für den die Wicklung 314 durchfließenden Strom dient, so daß die einzelnen Lagen hintereinander vom Strom durchflossen werden, wenn zwischen den Anschlüssen 319, 320 die Klemmenspannung liegt.

Beim zuletzt beschriebenen Ausführungsbeispiel muß die zweite Isolationsschicht 317 dazu geeignet sein, die beiden Lagen 150 und 300, an denen die Klemmenspannung liegt, elektrisch gegeneinander zu isolieren. Daher ist die Dicke jeder Isolationsschicht 317 ca. 300 mal so groß wie die Dicke jeder ersten Isolationsschicht 310 zu wählen, wozu natürlich auch mehrere Isolationsschichten 317 vorgesehen werden können. Da die erste Isolationsschicht 310 bei Anwendung üblicher Isolierungsmaterialien eine Dicke von nur ca. 15 bis 25 *µ*m aufweisen braucht, erhöht die erforderliche Dicke der zweiten Isolationsschicht 317 den axialen Platzbedarf, wie bereits oben gewähnt wurde, nur wenig. Bei einer anderen Aufteilung der vorhandenen Lagen auf die beiden Scheiben 315, 316 muß die Dicke der zweiten Isolationsschicht 317 analog dazu in Abhängigkeit von der beim Betrieb maximal zwischen den verschiedenen Lagen sich ergebenden elektrischen Spannung gewählt werden. In jedem Fall kann die Isolationsschicht 317 durchgehend dieselbe, am auftretenden Maximalwert orientierte Dicke aufweisen.

Das anhand der Fig. 3 beschriebene Ausführungsbeispiel hat im übrigen den Vorteil, daß im Bereich des Kerns 301 die Verbindungsleitung 318 im Hinblick auf Spitzenspannungen weit weniger kritisch als bei Anwendung eines innen liegenden elektrischen Anschlusses ist. Daher kann der Wicklungsträger 303 vergleichsweise dünn ausgebildet oder durch eine dünne, um den Kern 301 gewickelte Isolationsschicht 321 (Fig. 3) ersetzt sein, die einen vergleichsweise niedrigen thermischen Widerstand besitzt. Es ist daher aus Gründen des Platzbedarfs nicht erforderlich, für den Bereich des Kerns 301 oder für den Raum zwischen den Scheiben 315, 316 neue Isolationsschichten zu entwickeln, die bei hoher elektrischer Isolierung eine besonders niedrige thermische Isolierung bewirken.

Die Erfindung bringt weiterhin den Vorteil mit sich, daß die in mittleren Bereichen der Scheiben 315, 316 erzeugte Wärme in radialer Richtung weit weniger Isolationsschichten 310 als bei einscheibiger Anordnung durchströmen muß. Die maximal zu durchströmende Zahl von Isolationsschichten 310 beträgt für die jeweils mittleren Lagen 75 bzw. 225 nur 75 statt bisher 150. In axialer Richtung bleibt der thermische Widerstand im wesentlichen unbeeinflußt, da die Wärme selbst beim Fehlen der zweiten Isolationsschicht 317 aus Symmetriegründen nur axial nach außen abfließen würde, wie durch die in Fig. 3 zusätzlich eingezeichneten Pfeile schematisch angedeutet ist, weshalb die Isolationsschicht 317 in einer thermisch unbedeutenden Grenzfläche liegt.

Die Erfindung ist nicht auf die beschriebenen Ausführungsbeispiele beschränkt, die auf vielfache Weise abgewandelt werden können. Insbesondere wäre es denkbar, den Magnetpol aus drei oder mehr Scheiben zusammenzusetzen, die dann entsprechend weniger Lagen hätten. Dabei könnten die zwischen den verschiedenen Lagen liegenden zweiten Isolationsschichten 317 entsprechend den sich ergebenden Maximalspannungen dünner als im Ausführungsbeispiel nach Fig. 3 ausgebildet werden, so daß der Wärmeabfluß aus mittleren Scheiben, die zwischen zwei axial außenliegenden Scheiben angeordnet sind, auch in axialer Richtung nicht völlig unterbunden wird. Rein rechnerisch gilt im Hinblick auf den Platzbedarf und die elektromagnetischen Größen sinngemäß dasselbe wie bei Magnetpolen aus zwei Scheiben.

Abgesehen davon stellen die angegebenen Größen für die Anzahl der vorhandenen Lagen und Scheiben, die angegebenen Materialien und die anhand der Fig. 1 erläuterte Herstellungsweise für den Magnetpol nur Beispiele dar, die in vielfacher Weise abgewandelt werden können. Insbesondere versteht sich, daß die verschiedenen Merkmale auch in anderen als den dargestellten und beschriebenen Kombinationen angewendet werden können.

## Patentansprüche

1. Magnetpol für Magnetschwebefahrzeuge mit einem Kern (301) und einer auf diesen aufgebrachten Wicklung (314), wobei die Wicklung (314) wenigstens zwei Scheiben (315, 316) aufweist, die aus in mehreren Lagen (1 ... 300) um den Kern (301) gewickelten Leitungsbändern (306) gebildet sind, und wobei die einzelnen Lagen (1 ... 300) durch erste Isolationsschichten (310, 321) radial gegeneinander und gegen den Kern (301) elektrisch isoliert sind, **dadurch gekennzeichnet, daß** die Scheiben (315, 316) durch wenigstens eine zweite Isolationsschicht (317) aus Isolierungsmaterial axial gegeneinander elektrisch isoliert sind und daß die Scheiben (315, 316) in Reihe geschaltet sind.

2. Magnetpol nach Anspruch 1, **dadurch gekennzeichnet, daß** die Leitungsbänder (306) mit entgegengesetztem Wicklungssinn um den Kern (301) gewickelt und am Kern (301) durch eine Verbindungsleitung (318) elektrisch miteinander verbunden sind.

3. Magnetpol nach Anspruch 2, **dadurch gekennzeichnet, daß** die radial äußersten Lagen (150, 300) mit elektrischen Anschlüssen (319, 320) versehen sind.

4. Magnetpol nach einem der Ansprüche 1 bis 3, **dadurch gekennzeichnet, daß** die beiden Scheiben (315, 316) im wesentlichen dieselbe Anzahl von Lagen (1 bis 150 bzw. 151 bis 300) aufweisen.

5. Magnetpol nach Anspruch 3 oder 4, **dadurch gekennzeichnet, daß** die zweite Isolationsschicht (317) durchgehend eine Dicke aufweist, die in Abhängigkeit von der maximal zwischen zwei Lagen der beiden Scheiben (315, 316) vorkommenden Spannung gewählt ist.

6. Magnetpol nach einem der Ansprüche 1 bis 5, **dadurch gekennzeichnet, daß** die radial innersten Lagen (1, 151) der Scheiben (315, 316) durch eine um den Kern (301) gewickelte Isolationsschicht (321) elektrisch gegen den Kern (301) isoliert sind.

## Claims

1. A magnetic pole for magnetic levitation vehicles having a core (301) and a coil (314) attached thereto, wherein the coil (314) has at least two plates (315, 316) which are formed from conduction bands (306) wound in a plurality of layers (1...300) about the core (301), and wherein the individual layers (1...300) are electrically insulated by first insulation layers (310, 321) radially in respect of one another and in respect of the core (301), **characterized in that** the plates (315, 316) are electrically insulated axially in respect of one another by at least a second insulation layer (317) made of insulating material and that the plates (315, 316) are connected in series.

2. The magnetic pole according to claim 1, **characterized in that** the conductance bands (306) are wound around the core (301) in an opposite winding direction and are electrically connected to one another at the core (301) by a connection line (318).

3. The magnetic pole according to claim 2, **characterized in that** the radially outermost layers (150, 300) are provided with electrical connections (319, 320).

4. The magnetic pole according to one of claims 1 to 3, **characterized in that** the two plates (315, 316) have substantially the same number of layers (1 to 150 or 151 to 300).

5. The magnetic pole according to claim 3 or 4, **characterized in that** the second insulation layer (317) has a continuous thickness which is chosen depending on the maximum tension occurring between two layers of the two plates (315, 316).

6. The magnetic pole according to one of claims 1 to 5, **characterized in that** the radially innermost layers (1, 151) of the plates (315, 316) are electrically insulated in respect of the core (301) by an insulation layer (321) wound about the core (301).

## Revendications

1. Pôle magnétique pour véhicules à sustentation magnétique avec un noyau (301) et un enroulement (314) appliqué sur celui-ci, dans lequel l'enroulement (314) présente au moins deux disques (315, 316) formés par plusieurs bandes de conduction (306) enroulées en plusieurs couches (1 ... 300) autour du noyau (301), et dans lequel les couches individuelles (1 ... 300) sont isolées électriquement de façon radiale les unes par rapport aux autres et par rapport au noyau (301),
**caractérisé en ce que** les disques (315, 316) sont isolés électriquement de façon axiale les uns par rapport aux autres par au moins une deuxième couche d'isolation (317) en un matériau isolant et que les disques (315, 316) sont couplés en série.

2. Pôle magnétique selon la revendication 1, **caractérisé en ce que** les bandes de conduction (306) sont enroulées autour du noyau (301) avec un sens d'enroulement opposé et sont reliées électriquement les unes aux autres au niveau du noyau (301) par une ligne de raccordement (318).

3. Pôle magnétique selon la revendication 2, **caractérisé en ce que** les couches radialement le plus à l'extérieur (150, 300) sont dotées de connexions électriques (319, 320).

4. Pôle magnétique selon l'une des revendications 1 à 3, **caractérisé en ce que** les deux disques (315, 316) présentent sensiblement le même nombre de couches (1 à 150 ou 151 à 300).

5. Pôle magnétique selon la revendication 3 ou 4, **caractérisé en ce que** la deuxième couche d'isolation (317) présente, de bout en bout, une épaisseur qui est sélectionnée en fonction de la tension maximale ayant lieu entre deux couches des deux disques (315, 316).

6. Pôle magnétique selon l'une des revendications 1 à 5, **caractérisé en ce que** les couches radialement le plus à l'intérieur (1, 151) des disques (315, 316) sont isolées électriquement par rapport au noyau (301) par une couche d'isolation (321) enroulée autour du noyau (301).
